# EUROPÄISCHE PATENTSCHRIFT

(11) **EP 1 190 666 B1**
(45) Veröffentlichungstag und Bekanntmachung des Hinweises auf die Patenterteilung: **19.03.2008**
(21) Anmeldenummer: 01113590.2
(22) Anmeldetag: 15.06.2001
(51) Int. Cl.: A47L 15/42, F16K 15/04, F16K 11/056

(54) **Ventil für eine Geschirrspülmaschine mit einem beweglich angeordneten Verschliesselement**
Valve for a dishwasher with a movable closure device
Valve pour lave-vaisselle avec dispositif de fermeture mobile

(30) Priorität: 31.08.2000 DE 10042783
(43) Veröffentlichungstag der Anmeldung: 27.03.2002
(73) Patentinhaber: AEG Hausgeräte GmbH, 90429 Nürnberg (DE)
(72) Erfinder: Eckert, Holger, 90469 Nürnberg (DE); Wolfgang Schmidt, D-91238 Engelthal (DE)

(56) Entgegenhaltungen:
- EP-A- 0 237 994
- DE-A- 4 404 369
- FR-A- 2 789 451
- US-A- 2 918 927
- US-A- 5 486 089

## Beschreibung

Die Erfindung betrifft ein Ventil für eine Geschirrspülmaschine mit einem in einem Hohlraum eines Ventilkörpers beweglich angeordneten Verschließelement (FR-A-2 789 451).

In der EP 0 237 994 B1 ist ein Umsteuerventil beschrieben, bei dem in einem Hohlraum eine Kugel eingeschlossen ist. Der Hohlraum ist eingangsseitig mit einer Umwälzpumpe verbunden und ausgangsseitig durch einen ersten Auslaß mit einer ersten Leitung zu einem unteren Sprüharm sowie durch einen zweiten Auslaß mit einer zweiten Leitung zu einem oberen Sprüharm. Bei länger ausgeschalteter Pumpe liegt die Ventilkugel in einer Ruhestellung, von der sie nach dem Einschalten der Pumpe zum zweiten Auslaß angehoben wird und diesen bis auf einen Leckstrom verschließt. Bei kurzzeitigem Ausschalten der Pumpe wird die Ventilkugel durch die rückströmende Flüssigkeit aus der zweiten Leitung vom zweiten Auslaß weg entlang einer nach oben verlaufenden Führungseinrichtung in Richtung des ersten Auslasses gedrängt. Die Ventilkugel bleibt in der Nähe des ersten Auslasses so lange die Flüssigkeit aus der zweiten Leitung strömt. Wird innerhalb dieses Zeitraums die Umwälzpumpe wieder angeschaltet, so wird die Kugel durch die Flüssigkeitsströmung von der Umwälzpumpe zum ersten Auslaß gedrückt und verschließt diesen. Wird die Umwälzpumpe in diesem Zeitraum nicht eingeschaltet, so wird die Ventilkugel entlang der Führungseinrichtung durch die Schwerkraft zur Ruhestellung zurückgeführt. Damit wird ein Ventil mit zwei Schaltstellungen zur Verfügung gestellt, bei dem die Flüssigkeitsströmung entweder durch den ersten oder durch den zweiten Auslaß ausgelassen werden kann.

Beim Wiedereinschalten der Umwälzpumpe muß die Kugel durch die Flüssigkeitsströmung von der Führungsbahn abgehoben und ohne Führung jeweils eine freie Strecke zum ersten oder zweiten Auslaß zurücklegen. Weiterhin durchströmt die Flüssigkeit auf ihrem Weg vom Einlaß zum ersten oder zweiten Auslaß ein größeres Volumen im Hohlraum des Ventils, so daß Wirbel entstehen können und der Strömungswiderstand hoch ist.

Davon ausgehend ist es die Aufgabe der Erfindung, ein Ventil für eine Geschirrspülmaschine vorzuschlagen, bei dem der Strömungswiderstand verringert ist.

Erfindungsgemäß wird diese Aufgabe mit den Merkmalen des Anspruchs 1 gelöst.

Gemäß Anspruch 1 wird ein Ventil für eine Geschirrspülmaschine vorgesehen, bei dem ein Ventilkörper einen Hohlraum umschließt, in dem ein beweglich angeordnetes Verschließelement eingeschlossen ist. Ein erster oder zweiter Auslaß ist durch das Verschließelement sperrbar. Durch einen Einlaß wird eine Flüssigkeit in den Hohlraum zugeführt und durch den ersten und/oder zweiten Auslaß in eine erste und/oder zweite Flüssigkeitsleitung ausgelassen. Die Flüssigkeitsströmungen zum ersten und/oder zweiten Auslaß werden dabei mittels einer Strömungleiteinrichtung auf einem vorgegebenen Weg vom Einlaß zu den Auslässen geführt, so daß diese strömungsgünstig ohne Verwirbelung durch den Hohlraum des Ventils geleitet werden. Dadurch wird der Strömungswiderstand verringert und durch die höhere Geschwindigkeit der Flüssigkeit verbessert sich z.B. die Spüleffizienz der Geschirrspülmaschine.

Weiterhin kann hinter der Strömungsleiteinrichtung das Verschließelement eine Zwischenstellung zwischen dem ersten und zweiten Auslaß einnehmen, in der es strömungsfrei gehalten wird, so daß in dieser Stellung durch beide Auslässe Flüssigkeit austreten kann.

Bei einer vorteilhaften Ausgestaltung ist die Strömungsleiteinrichtung als Strömungsteiler ausgebildet, der die zwei Strömungen im Bereich des Einlasses aufteilt. Damit kann durch den Strömungsteiler das Verhältnis der Strömungsmengen zum ersten und zweiten Auslaß festgelegt werden. Z.B. kann damit eine geringere Flüssigkeitsmenge zu einem der Sprüharme geleitet werden, um dort gering verschmutztes Geschirr schonend zu reinigen.

Bei einer weiteren Ausgestaltung ist am Ventil ein dritter Auslaß zwischen dem ersten und zweiten Auslaß angeordnet. Der dritte Auslaß kann dabei z.B. seitlich vom Hohlraum des Ventils abzweigen und unmittelbar in einen Spülraum der Geschirrspülmaschine münden oder mit einer dritten Flüssigkeitsleitung verbunden sein. Die dritte Flüssigkeitsleitung kann in den Spülmaschinensumpf münden, mit der Ansaugleitung der Umwälzpumpe oder mit einem Sprüharm verbunden sein. Vorteilhaft läßt sich der dritte Auslaß ebenfalls durch das Verschließelement sperren, so daß damit die Versorgung eines dritten Sprüharms unterbrochen werden kann. Andererseits wird beim Sperren des dritten Auslasses das Verschließelement sicher in dieser Stellung durch den Druckunterschied innerhalb und außerhalb des Ventils gehalten.

Wird gemäß einer weiteren Ausgestaltung das Verschließelement zwischen dem ersten und zweiten Auslaß geführt, so können die jeweiligen Schaltstellungen beim Umschalten definierter angesteuert werden. Die Führungseinrichtung weist dabei regelmäßig zumindest eine Führungsfläche oder zumindest zwei Führungskanten auf, auf denen das Verschließelement bewegt werden kann.

Das Verschließelement ist dabei regelmäßig ein Körper, der die Führungseinrichtung entlanggleiten oder -rollen kann, z.B. ein Zylinder und besonders vorteilhaft eine Kugel. Das Verschließelement ist vorteilhaft schwerer als die Flüssigkeit, so daß das Verschließelement auf der unten angeordneten Begrenzung der Führungseinrichtung aufliegt, unabhängig davon, ob der Hohlraum des Ventils mit der Flüssigkeit oder mit Luft gefüllt ist.

Bei einer besonders vorteilhaften Ausgestaltung ist die Führungsbahn allseitig begrenzt und nur geringe seitliche Abweichungen des Verschließelements sind möglich. Durch den definierten Verlauf des Verschließelements wird verhindert, daß es eine für das Umschalten ungeeignete Stellung einnehmen kann.

Wird bei einer weiteren Ausgestaltung während des Zulaufs von Flüssigkeit ins Ventil, z.B. bei Betrieb einer Umwälzpumpe, durch eine Leckströmungseinrichtung beim Sperren des ersten Auslasses eine Leckströmung in die erste Flüssigkeitsleitung eingeleitet, so wird die erste Flüssigkeitsleitung mit Flüssigkeit gefüllt. Wenn das Verschließelement den ersten Auslaß sperrt, kann damit bei Unterbrechung der Flüssigkeitszufuhr durch den Zulauf eine fest vorgegebene Flüssigkeitsmenge mit einer fest vorgegebenen Strömungsgeschwindigkeit aus der ersten Flüssigkeitsleitung z.B. durch die angehaltene Umwälzpumpe abfließen.

Anhand von Figuren wird ein Ausführungsbeispiel der Erfindung erläutert.

Es zeigen:
- Fig. 1: eine schematische Darstellung eines Spülflüssigkeitskreislaufs einer Geschirrspülmaschine,
- Fig. 2A: eine schematische Seitenansicht eines Umschaltventils mit einer Ventilkugel in verschiedenen Schaltstellungen im Hohlraum des Umschaltventils,
- Fig. 2B: eine schematische Seitenansicht des Umschaltventils von Fig. 2A mit der Ventilkugel in einer weiteren Schaltstellung und
- Fig. 3: eine schematische Querschnittsansicht durch das Umschaltventil längs der Schnittlinie A-B in Fig. 2A.

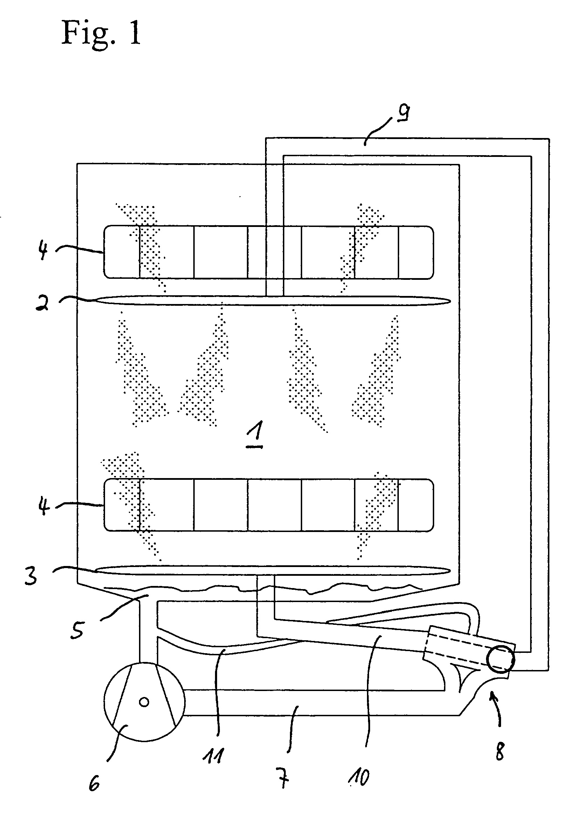

Fig. 1 zeigt eine schematische Darstellung des Spülflüssigkeitskreislaufs bei einer Geschirrspülmaschine. In einem Spülraum 1 der Geschirrspülmaschine ist ein oberer Sprüharm 2 und ein unterer Sprüharm 3 zur Beaufschlagung des in Geschirrkörben 4 gelagerten Spülguts mit Spülflüssigkeit angeordnet. Die von den Sprüharmen 2, 3 versprühte Spülflüssigkeit wird am Boden des Spülraums 1 im Spülmaschinensumpf 5 aufgefangen. Die aufgefangene Spülflüssigkeit wird über einen Zulauf von einer Umwälzpumpe 6 angesaugt und durch eine Verbindungsleitung 7 einem Umschaltventil 8 zugeführt.

Vom Umschaltventil 8 läuft die Spülflüssigkeit durch eine erste Spülleitung 9 zum oberen Sprüharm 2 und durch eine zweite Spülleitung 10 zum unteren Sprüharm 3. Weiterhin zweigt vom Umschaltventil 8 eine Bypass-Leitung 11 ab, die in den Zulauf zur Umwälzpumpe 6 mündet.

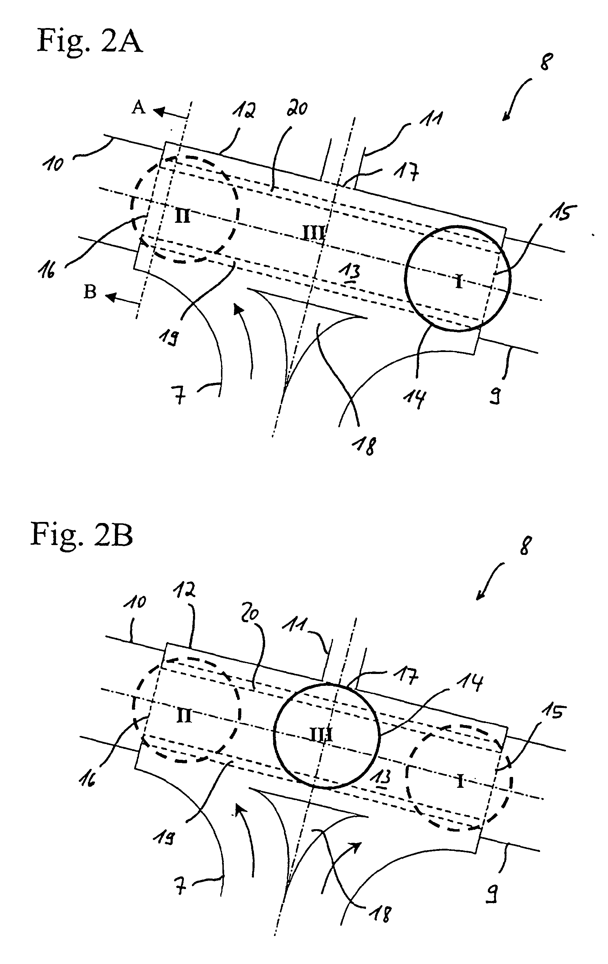

In Fig. 2A ist das Umschaltventil 8 in schematischer Seitenansicht wiedergegeben. Ein Ventilkörper 12 des Umschaltventils 8 umschließt einen Hohlraum 13, in dem eine Kugel 14 eingeschlossen ist.

Wie in Fig. 2A dargestellt, weist der Ventilkörper 12 eine erste Öffnung 15 an der rechten Seite auf, die den Hohlraum 13 mit der ersten Spülleitung 9 verbindet. An der linken Seite weist der Ventilkörper 12 eine zweite Öffnung 16 auf, die den Hohlraum 13 mit der zweiten Spülleitung 10 verbindet. Weiterhin ist an der oben dargestellten Oberseite des Ventilkörpers 12 eine Bypass-Öffnung 17 angeordnet, die den Hohlraum 13 mit der Bypass-Leitung 11 verbindet. Im Hohlraum 13 ist ein Strömungsleitkörper 18 ausgebildet, der die aus der Verbindungsleitung 7 einströmende Spülflüssigkeit strömungsgünstig zur ersten und/oder zweiten Öffnung 15, 16 leitet.

Das Umschaltventil 8 hat drei Schließstellungen der im Hohlraum 13 beweglich gelagerten Kugel 14, die in Fig. 2A und 2B mit I, II und III bezeichnet sind. Die geometrischen Verhältnisse der relativen Stellungen der Kugel sind in den Figuren nur schematisch wiedergegeben. In den Stellungen I, II und III wird die Kugel 14 während des Betriebs der Umwälzpumpe 6 aufgrund des Druckunterschiedes zwischen dem Druck der Spülflüssigkeit im Hohlraum 13 und dem ausgangsseitigen Druck der Spülflüssigkeit in den Leitungen 9, 10 bzw. 11 festgehalten.

Die Kugel 14 wird im Hohlraum 13 durch untere Führungsstege 19 und obere Führungsstege 20 geführt. Die Führungsstege 19, 20 ermöglichen eine Bewegung der Kugel 14 entlang der in Fig. 2A strichpunktiert dargestellten Mittellinie zwischen den Schließstellungen I und II an der ersten und zweiten Öffnung 15, 16.

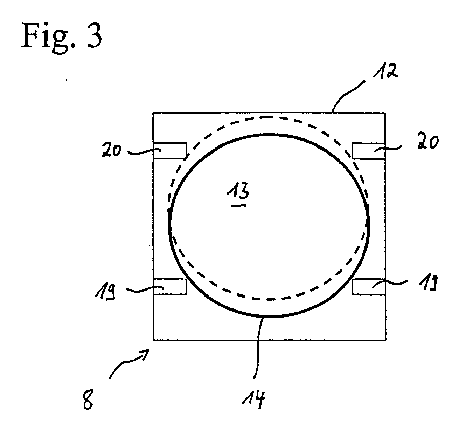

Fig. 3 zeigt eine schematische Querschnittsansicht durch das Umschaltventil 8 längs der Schnittlinie A-B in Fig. 2A. Durch ein Führungsspiel kann die Kugel 14 geringfügig gegenüber den Führungsstegen 19, 20 versetzt werden, um ein Festklemmen der Kugel zu vermeiden und das Anheben der Kugel in die Schließstellung vor der Bypass-Öffnung 17 zu ermöglichen.

In der Stellung I verschließt die Kugel 14 die erste Öffnung 15, so daß die aus der Verbindungsleitung 7 eingeleitete Spülflüssigkeit im wesentlichen durch die zweite Öffnung 16 austritt. Der Hauptstrom der Spülflüssigkeit aus der Verbindungsleitung 7 strömt, wie in Fig. 2A durch den Pfeil dargestellt, am Strömungsleitkörper 18 links vorbei direkt in Richtung des zweiten Auslasses 16. Dadurch wird nur ein kleiner Volumenbereich des Hohlraums 13 durchströmt und die Möglichkeit zur Turbulenzbildung ist stark herabgesetzt, so daß der Strömungswiderstand stark vermindert ist.

In Stellung I fließt eine geringe Bypass-Flüssigkeitsmenge durch die Bypass-Öffnung 17. Weiterhin bewirkt in dieser Stellung eine nicht dargestellte Leckströmungseinrichtung, daß trotz des Verschließens der ersten Öffnung 15 eine geringe Leckflüssigkeitsmenge in die erste Leitung 9 eintritt. Durch diese Leckflüssigkeitsströmung wird gewährleistet, daß bei Betrieb der Umwälzpumpe 6 immer die Flüssigkeitssäule in der ersten Leitung 9 bis zum oberen Sprüharm 2 ansteht und bei Abschalten der Umwälzpumpe 6 ein definiertes Flüssigkeitsvolumen mit definierter Geschwindigkeit aus der Öffnung 15 ausströmt.

In der Stellung II, die in Fig. 2A durch eine gestrichelte Kugel dargestellt ist, verschließt die Kugel 14 die zweite Öffnung 16, so daß die Spülflüssigkeit im wesentlichen durch die erste Öffnung 15 und geringfügig durch die Bypass-Öffnung 17 austritt. In diesem Fall fließt der Hauptstrom der Spülflüssigkeit aus der Verbindungsleitung 7 am Strömungsleitkörper 18 rechts vorbei direkt in Richtung des ersten Auslasses 15. Wie in Stellung I ist auch hier der Strömungswiderstand stark vermindert.

In der Stellung III, die in Fig. 2B durch eine Kugel mit durchgezogener Linie dargestellt ist, verschließt die Kugel 14 die Bypass-Öffnung 17, so daß sich die von der Verbindungsleitung einströmende Spülflüssigkeit am Leitkörper 18, der hier wie ein Strömungsteiler wirkt, aufteilt und sowohl durch die erste Öffnung 15 als auch durch die zweite Öffnung 16 tritt. Die Strömungsteilung ist in Fig. 2B durch zwei Pfeile angedeutet. Auch hier gehen die beiden Hauptströmungen unmittelbar am Strömungsleitkörper 18 vorbei direkt zum ersten und zweiten Auslaß 15, 16, während das Volumen des Hohlraums hinter dem Strömungsleitkörper 18 (im Bereich der Stellung III) strömungsfrei ist. Daher ist die Lage der Kugel 14 in dieser Stellung strömungsfrei und folglich stabil.

In Stellung III werden sowohl der obere Sprüharm 2 als auch der untere Sprüharm 3 mit Spülflüssigkeit versorgt. In den anderen Fällen wird jeweils entweder dem oberen Sprüharm 2 oder dem unteren Sprüharm 3 Spülflüssigkeit zugeführt.

Es folgt eine kurze Beschreibung der Umschaltmöglichkeiten für das Umschaltventil 8:

Zunächst wird angenommen, daß die Umwälzpumpe 6 eine längere Zeit (z.B. für 2 Sekunden) nicht betrieben wurde. In diesem Zustand ist die Spülflüssigkeit aus der ersten und zweiten Spülleitung 9, 10 sowie der Bypass-Leitung 11 durch die Umwälzpumpe 6 abgelaufen bzw. es sind keine Rückströmungen mehr im Hohlraum 13 vorhanden. In diesem Zustand rollt die Kugel 14 entlang der Führungsstege 19, 20 in die Ruhestellung, die der Schließstellung I der Kugel 14 entspricht oder zumindest in deren unmittelbaren Nähe liegt.

Wird aus diesem Zustand die Umwälzpumpe 6 eingeschaltet, so wird aufgrund der Flüssigkeitsströmung von der Verbindungsleitung 7 die Kugel 14 in die Stellung I gedrängt, in der sie die erste Öffnung 15 verschließt. Durch die Leckflüssigkeitseinrichtung strömt jedoch Spülflüssigkeit in die erste Spülleitung 9 ein und füllt diese mit Spülflüssigkeit.

Wird die Umwälzpumpe 6 nun abgestellt, so bewegt sich die Kugel 14 durch die Rückströmung der Spülflüssigkeit aus der ersten Spülleitung 9 von der Stellung I über die Stellung III in Richtung Stellung II.

Wird während des Durchlaufens des Bereiches der Stellung III (ca. 0,2 bis 0,8 s nach dem Abschalten der Umwälzpumpe) die Umwälzpumpe 6 eingeschaltet, so wird die Kugel 14 aufgrund der Strömungsfreiheit hinter dem Strömungsleitkörper 18 gehalten. Bewegt sich die Kugel in Richtung einer der beiden Öffnungen 15 und 16, so wird die Kugel durch die starken Strömungen am Leitkörper 18 vorbei zu den Öffnungen 15, 16 in den Bereich der Stellung III zurückgedrängt. Da der Bereich III beidseitig von den Strömungen umspült wird, heben sich auch die Sogwirkungen durch die Strömungen auf. Zusätzlich wird die Kugel durch die Druckdifferenz der Spülflüssigkeit im Hohlraum 13 und dem geringen Druck in der Bypass-Leitung 11 zur Bypass-Öffnung 17 gesogen und dort festgehalten.

Wird während des Durchlaufens des Bereichs III die Umwälzpumpe 6 noch nicht eingeschaltet, so bewegt sich die Kugel über die Stellung III bis in die Nähe der Stellung II (ca. 1 bis 1,2 sec nach dem Abschalten der Umwälzpumpe). Wird während des Aufenthalts der Kugel in diesem Bereich die Umwälzpumpe 6 eingeschaltet, so verschließt aufgrund der einsetzenden Strömung die Kugel die zweite Öffnung 16.

Wird jedoch die Umwälzpumpe 6 zum Zeitpunkt der Kugelstellung II nicht eingeschaltet, so rollt die Kugel nach dem Ablaufen der Spülflüssigkeiten aus den Spülleitungen 9, 10, 11 zur Ruhestellung zurück. Während des Zurückrollens der Kugel durch den Bereich III (ca. 1,4 bis 1,6 s nach dem Abschalten der Umwälzpumpe) besteht wiederum die Möglichkeit durch Einschalten der Umwälzpumpe, die Kugel in der Schließstellung III zu halten. Somit gibt es zwei Zeitfenster, in denen die Kugel die Stellung III passiert und durch Einschalten der Umwälzpumpe 6 eine Ventilstellung erzielt wird, bei der beide Sprüharme 2, 3 mit Spülflüssigkeit versorgt werden.

Wird auch zu diesem Zeitpunkt die Umwälzpumpe nicht gestartet, so kehrt die Kugel schließlich wieder in ihre Ruhestellung bei oder in Stellung I zurück.

### Bezugszeichenliste

- 1:: Spülraum
- 2:: oberer Sprüharm
- 3:: unterer Sprüharm
- 4:: Geschirrkorb
- 5:: Spülmaschinensumpf
- 6:: Umwälzpumpe
- 7:: Verbindungsleitung
- 8:: Umschaltventil
- 9:: erste Spülleitung
- 10:: zweite Spülleitung
- 11:: Bypass-Leitung
- 12:: Ventilkörper
- 13:: Hohlraum
- 14:: Kugel
- 15:: erste Öffnung
- 16:: zweite Öffnung.
- 17:: Bypass-Öffnung
- 18:: Strömungsleitkörper
- 19:: unterer Führungssteg
- 20:: oberer Führungssteg

## Patentansprüche

1. Ventil für eine Geschirrspülmaschine mit einem Ventilkörper (12), der einen Hohlraum (13) umschließt, einem Einlass (7) für einen Flüssigkeitszulauf in den Hohlraum (13), einem ersten Auslass (15), der eine erste Flüssigkeitsleitung (9) mit dem Hohlraum (13) verbindet, einem zweiten Auslass (16), der eine zweite Flüssigkeitsleitung (10) mit dem Hohlraum (13) verbindet, wobei der erste Auslass (15) zumindest teilweise unterhalb des zweiten Auslasses (16) angeordnet ist, einem im Hohlraum (13) beweglich angeordneten Verschließelement (14), durch das der erste oder der zweite Auslass (15, 16) sperrbar ist, und einer im Hohlraum (13) im Bereich des Einlasses (7) angeordneten Strömungsleiteinrichtung (18), **dadurch gekennzeichnet, dass**
das Verschließelement (14) hinter der Strömungsleiteinrichtung (18) eine Zwischenstellung zwischen dem ersten und zweiten Auslass (15, 16) einnehmen kann, in der es strömungsfrei gehalten wird, so dass durch beide Auslässe Flüssigkeit austreten kann.

2. Ventil nach Anspruch 1, **dadurch gekennzeichnet, dass** die Strömungsleiteinrichtung (18) ein Strömungsteiler ist.

3. Ventil nach Anspruch 1 oder 2, **dadurch gekennzeichnet, dass** zumindest ein dritter Auslass (17) zwischen dem ersten Auslass (15) und zweiten Auslass (16) angeordnet ist.

4. Ventil nach Anspruch 3, **dadurch gekennzeichnet, dass** der dritte Auslass (17) durch das Verschließelement (14) sperrbar ist.

5. Ventil nach Anspruch 3 oder 4, **dadurch gekennzeichnet, dass** der dritte Auslass (17) bezüglich des Einlasses (7) hinter der Strömungsleiteinrichtung (18) angeordnet ist.

6. Ventil nach einem der vorhergehenden Ansprüche, **gekennzeichnet durch** eine Führungseinrichtung (19, 20) zum Führen des Verschließelements (14) zwischen dem ersten Auslass (15) und dem zweiten Auslass (16).

7. Ventil nach Anspruch 6, **dadurch gekennzeichnet, dass** die Führungseinrichtung (19, 20) bezüglich des Einlasses (7) teilweise hinter der Strömungsleiteinrichtung (18) angeordnet ist.

8. Ventil nach Anspruch 6 oder 7, **dadurch gekennzeichnet, dass** die Führungseinrichtung (19, 20) das Verschließelement (14) im wesentlichen auf eine Führungslinie zwischen dem ersten und zweiten Auslass (15, 16) festlegt.

9. Ventil nach einem der vorhergehenden Ansprüche, **gekennzeichnet durch** eine Leckströmungseinrichtung, **durch** die eine reduzierte Flüssigkeitsströmung in die erste Flüssigkeitsleitung (9) einleitbar ist, wenn das Verschließelement (14) den ersten Auslass (15) sperrt.

## Claims

1. Valve for a dishwasher having a valve body (12), which encloses a cavity (13), an inlet (7) for a liquid feed into the cavity (13), a first outlet (15), which connects a first liquid pipe (9) to the cavity (13), a second outlet (16), which connects a second liquid pipe (10) to the cavity (13), wherein the first outlet (15) is arranged at least partly below the second outlet (16), a closure element (14) arranged to be movable in the cavity (13) and by means of which the first or the second outlet (15, 16) can be shut, and a flow-conducting device (18) arranged in the cavity (13) in the region of the inlet (7), **characterised in that** the closure element (14) behind the flow-conducting device (18) may occupy an intermediate position between the first and second outlet (15, 16), in which it is kept flow-free, so that liquid may emerge through both outlets.

2. Valve according to claim 1, **characterised in that** the flow-conducting device (18) is a flow divider.

3. Valve according to claim 1 or 2, **characterised in that** at least one third outlet (17) is arranged between the first outlet (15) and second outlet (16).

4. Valve according to claim 3, **characterised in that** the third outlet (17) can be shut by the closure element (14).

5. Valve according to claim 3 or 4, **characterised in that** the third outlet (17) with respect to the inlet (7) is arranged behind the flow-conducting device (18).

6. Valve according to one of the preceding claims, **characterised by** a guide device (19, 20) for guiding the closure element (14) between the first outlet (15) and the second outlet (16).

7. Valve according to claim 6, **characterised in that** the guide device (19, 20) with respect to the inlet (7) is arranged partly behind the flow-conducting device (18).

8. Valve according to claim 6 or 7, **characterised in that** the guide device (19, 20) fixes the closure element (14) essentially on a guide line between the first and second outlet (15, 16).

9. Valve according to one of the preceding claims, **characterised by** a leakage-flow device, through which a reduced liquid flow can be introduced into the first liquid pipe (9) if the closure element (14) shuts the first outlet (15).

## Revendications

1. Vanne pour un lave-vaisselle avec un corps de vanne (12) qui renferme un espace creux (13), une admission (7) pour une arrivée de liquide dans l'espace creux (13), une première évacuation (15) qui relie un premier conduit de liquide (9) avec l'espace creux (13), une deuxième évacuation (16) qui relie un deuxième conduit de liquide (10) à l'espace creux (13), où la première évacuation (15) est disposée au moins partiellement en dessous de la deuxième évacuation (16), un élément de fermeture (14) disposé d'une manière mobile dans l'espace creux (13), par lequel la première ou la seconde évacuation (15, 16) peut être fermée, et une installation de guidage d'écoulement (18) disposée dans l'espace creux (13) dans la zone de l'admission (7), **caractérisée en ce que** l'élément de fermeture (14) peut occuper derrière l'installation de guidage d'écoulement (18) une position intermédiaire entre la première et la seconde évacuation (15, 16), dans laquelle il est retenu sans écoulement de sorte que le liquide peut sortir à travers les deux évacuations.

2. Vanne selon la revendication 1, **caractérisée en ce que** l'installation de guidage d'écoulement (18) est un diviseur d'écoulement.

3. Vanne selon la revendication 1 ou 2, **caractérisée en ce qu'**au moins une troisième évacuation (17) est disposée entre la première évacuation (15) et la deuxième évacuation (16).

4. Vanne selon la revendication 3, **caractérisée en ce que** la troisième évacuation (17) peut être fermée par l'élément de fermeture (14).

5. Vanne selon la revendication 3 ou 4, **caractérisée en ce que** la troisième évacuation (17) est disposée relativement à l'admission (7) derrière l'installation de guidage d'écoulement (18).

6. Vanne selon l'une des revendications précédentes, **caractérisée par** une installation de guidage (19, 20) pour le guidage de l'élément de fermeture (14) entre la première évacuation (15) et la deuxième évacuation (16).

7. Vanne selon la revendication 6, **caractérisée en ce que** l'installation de guidage (19, 20) est disposée relativement à l'admission (7) partiellement derrière l'installation de guidage d'écoulement (18).

8. Vanne selon la revendication 6 ou 7, **caractérisée en ce que** l'installation de guidage (19, 20) fixe l'élément de fermeture (14) sensiblement sur une ligne de guidage entre les première et deuxième évacuations (15, 16).

9. Vanne selon l'une des revendications précédentes, **caractérisée par** une installation d'écoulement de fuite par laquelle un écoulement de liquide réduit peut être introduit dans le premier conduit de liquide (9) lorsque l'élément de fermeture (14) ferme la première sortie (15).
